# EUROPEAN PATENT APPLICATION

(11) **EP 1 788 062 A1**
(43) Date of publication of application: **23.05.2007**
(21) Application number: 05110893.4
(22) Date of filing: 17.11.2005
(51) Int. Cl.: C09K 11/02, C09K 11/56, C09K 11/58

(54) **White light emitting electroluminescent phosphor**

(71) Applicant: IEE INTERNATIONAL ELECTRONICS & ENGINEERING S.A., 6468 Echternach (LU)
(72) Inventor: BRUNACCI, Antonio, 2351, LUXEMBOURG (LU); JOUANIQUE-DUBUIS, Cécile, 57570, EVRANGE (FR)
(74) Representative: Ocvirk, Philippe

(57) **Abstract**

Phosphor blend comprises: from 20 to 28 wt.% of a first electroluminescent phosphor having an x color coordinate from 0.144 to 0.174 and an y color coordinate from 0.165 to 0.225; from 4 to 14 wt.% of a second electroluminescent phosphor having an x color coordinate from 0.155 to 0.185 and an y color coordinate from 0.380 to 0.420; and from 65 to 75 wt.% of a third electroluminescent phosphor having an x color coordinate from 0.535 to 0.555 and an y color coordinate from 0.440 to 0.460.

## Description

### TECHNICAL FIELD

The present invention generally relates to white light emitting electroluminescent phosphors.

### BACKGROUND ART

Phosphors are a known class of materials that emit electromagnetic radiations in response to stimulation by a form of energy. Electroluminescent (hereinafter, EL) phosphors are stimulated to emission by placement in an electrical field. Generally, the emission of the phosphors is in the visible region of the spectrum, each phosphor having its own characteristic color of emission and period of time during which light is emitted after the excitation ceases.

Commonly used phosphors are based on ZnS and activated with one or more other materials such as Mn, Cu and/or Cl. Typically, each EL material is defined by its color coordinates, mainly x, y coordinates from the chromaticity diagram defined by the "Commission Internationale de l'Eclairage" (CIE) in 1931, which represents all colors perceivable by the human eye.

EL phosphors have many commercial uses such as LCD backlights, copy machines, automotive dashboard displays, nightlights, control switch illumination, emergency lighting, watch dials, etc. These phosphors individually have emission colors ranging from orange-yellow through green to greenish-blue and blue.

It is also known to combine two, three, or more phosphors to make a white light emitting phosphor blend.

EP-A-1 371 711 for example discloses a white-light emitting phosphor blend, which is said to have a longer half-life. This phosphor blend, when incorporated in a lamp and energized by a suitable alternating current electric field, emits white light having an x color coordinate from 0.325 to 0.335 and an y color coordinate from 0.355 and 0.360. The announced half-life is of at least 750 hours, even over 1000 hours.

A problem however frequently observed with white light emitting phosphor blends is chromatic instability of the emitted light during service lifetime.

### OBJECT OF THE INVENTION

The object of the present invention is to provide a white-light emitting phosphor blend that has an improved chromatic stability. This object is achieved by a phosphor blend as claimed in claim 1.

### GENERAL DESCRIPTION OF THE INVENTION

As mentioned above, in conventional phosphor blends a change in color coordinates over time is generally observed. This is due to the natural color decay of the individual phosphors over time. Since the contribution of each phosphors in the blend do not vary similarly over time, this leads to the generally observed chromaticity variations.

By contrast, the present invention proposes a white-light emitting phosphor blend having an improved chromatic stability. According to the invention, this phosphor blend comprises:
from 20 to 28 wt.% of a first electroluminescent phosphor having an x color coordinate from 0.144 to 0.174 and an y color coordinate from 0.165 to 0.225;
from 4 to 14 wt.% of a second electroluminescent phosphor having an x color coordinate from 0.155 to 0.185 and an y color coordinate from 0.380 to 0.420; and
from 65 to 75 wt.% of a third electroluminescent phosphor having an x color coordinate from 0.535 to 0.555 and an y color coordinate from 0.440 to 0.460.

These phosphor percentages are given with respect to the total amount of EL phosphors (100 wt.%) and do not take into account other materials (e.g. binding material) that may be added to the blend, as is known in the art.

The present invention thus proposes a particular mixture of EL phosphors having selected color coordinates, and mixed in prescribed amounts, so as to provide a blend emitting a white light that is chromatically more stable over time than known blends.

As a matter of fact, the present inventors have taken into account the unavoidable color decay of the individual phosphors over time in order to determine a blend composition that will vary over time within predetermined limits around the theoretical definition of white light coordinates: x=0.333, y=0.333. This approach significantly differs from prior art solutions, which focused either on increasing half-life or on having an initial color as close as possible from theoretic white.

Over time, the color emitted by the phosphor blends of the invention will stay in a closer vicinity from the theoretic white than known blends. In particular, at half-life, the light emitted by phosphor blends according to the invention will be closer to the theoretic white than known commercial blends.

The present phosphor blend, when incorporated into an electroluminescent lamp, and suitably energized by an electric field, emits white light having an x color coordinate from 0.260 to 0.300 and an y color coordinate from 0.280 to 0.340. At half-life, the emitted white light has an x color coordinate from 0.330 to 0.390 and an y color coordinate from0.340 to 0.400.

Preferably, the phosphor blend comprises 26 to 28 wt.% of the first electroluminescent phosphor; 5 to 8 wt.% of the second electroluminescent phosphor; and 66 to 68 wt.% of the third electroluminescent phosphor

For further improved chromatic stability, the luminance of the second and third phosphors should advantageously be at least 0.8 times that of the first electroluminescent phosphor. Indeed, the inventors have observed that blue phosphors typically have high luminance variability and thereby strongly affect the overall color and luminance of the blend.

In a particularly preferred embodiment, the phosphor blend comprises: 27 wt.% of a first electroluminescent phosphor having an x color coordinate of about 0.159 and an y color coordinate of about 0.210; 5 wt.% of a second electroluminescent phosphor having an x color coordinate of about 0.170 and an y color coordinate of about 0.400; and 68 wt.% of a third electroluminescent phosphor having an x color coordinate of about 0.545 and an y color coordinate of about 0.450. The first electroluminescent phosphor may then have a relative luminance of 1.00; the second electroluminescent phosphor a relative luminance of 0.90; and the third electroluminescent phosphor a relative luminance of 0.85 (relative luminances of second and third phosphors are given with respect to the first phosphor).

As is known in the art, the phosphors used herein may be based on ZnS that may be activated by one or more materials. For example, the first EL phosphor may comprise ZnS:Cu, Mn while the second and third EL phosphors may comprise ZnS:Cu. Also, the EL phosphors may be micro-encapsulated.

Under normal working conditions, the blends of the invention may have a half-life of ca. 2000 hours.

### BRIEF DESCRIPTION OF THE DRAWINGS

The present invention will now be described, by way of example, with reference to the accompanying drawings, in which:

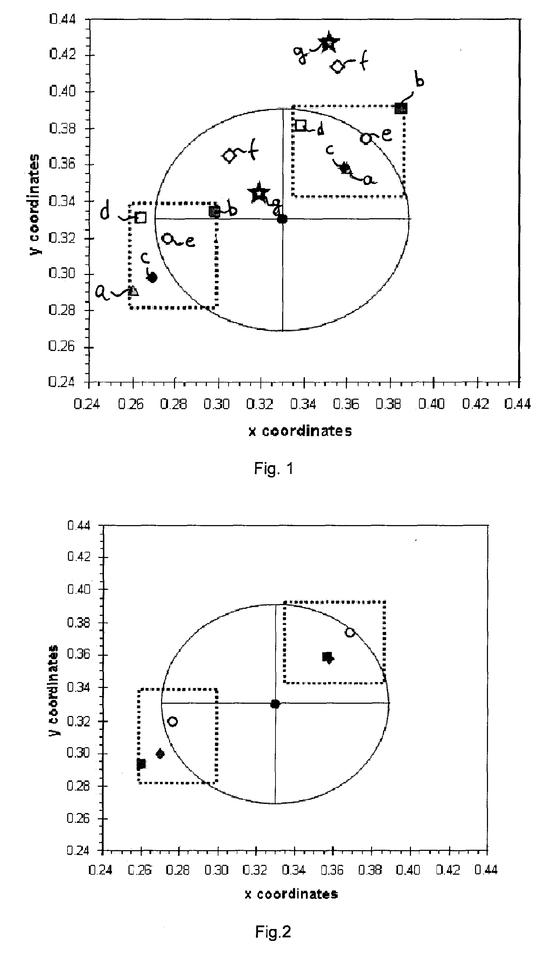

FIGS. 1 and 2 are graphs of CEI x, y color coordinates for different phosphor blends.

### DETAILED DESCRIPTION OF PREFERRED EMBODIMENTS

The present phosphor blend comprises a mixture of first, second and third EL phosphors, of basically blue, blue-green and orange color respectively. The blend particulars are summarized in table 1 below, wherein a color range is given for each of the first, second and third phosphors, as well as percentage of each phosphor, with respect to the total weight of phosphors (100 wt.%) in the blend. A preferred percentage range is given in the last column.

As is usual in the art, emission colors, either of phosphor blends or of the individual EL phosphors, are represented herein in terms of CIE x, y color coordinates.

**Table 1**

| **Phosphor type** | **x** | **y** | **Range (wt.%)** | **Preferred (wt.%)** |
|---|---|---|---|---|
| (1) blue | 0.144-0.174 | 0.165-0.225 | 20-28 | 26-28 |
| (2) blue-green | 0.155-0.185 | 0.380-0.420 | 4-14 | 5-8 |
| (3) orange | 0.535-0.555 | 0.440-0.460 | 65-75 | 66-68 |

It will be appreciated that the proposed phosphor blends have an improved chromatic stability over time. The present inventors have thought of taking the natural decay of individual EL phosphors into account to determine a phosphor blend composition that will vary over time within predetermined limits around the theoretical definition of white light coordinates: x=0.333, y=0.333. This implies that by contrast to prior art solutions which focused either on increasing half-life or having an initial color for the phosphor blend as close as possible from (0.333, 0.333), the initial color of the present phosphor blends may not emit an absolute theoretical white color, but over time it will remain longer in the close vicinity of the theoretical white point than know phosphor blends.

For an improved control of chromaticity over time, it is preferable to further adjust the luminance of the individual phosphors with respect to one another. In this connection, the inventors have observed that blue phosphors typically undergo the largest luminance variations (decrease) compared to blue-green and orange phosphors. Therefore, for an improved chromatic stability of the light emitted by the present phosphor blend, the second and third phosphors should preferably have a relative luminance of at least 0.80 with respect to the first phosphor.

### Example 1

To illustrate the present invention, several blends have been prepared from three commercial EL phosphors listed in table 2 below. These starting phosphors are micro-encapsulated EL phosphors manufactured by the DUREL Corporation (Chandler, Arizona).

**Table 2**

| **Phosphor** | **Reference** | **Emission color** | |
|---|---|---|---|
| Orange | 1 PHS004 | x = 0.545 | y = 0.450 |
| Blue | 1 PHS003 | x = 0.159 | y = 0.210 |
| Blue-Green | 1 PHS002 | x = 0.170 | y = 0.400 |

The blend compositions and testing results are listed in table 3. So-called "initial" and "aged" luminance has been measured for each blend. The initial luminance corresponds to the initial global light output of the blend measured immediately after the first 24 hours of operation. The aged luminance corresponds to the global light output of the blend at half-life. As used herein, the half-life of the phosphor or phosphor blend is defined as that period of time necessary for the light output of the energized phosphor or phosphor blend to decrease to one-half of its initial light output.

**Table 3**

| | Orange | Blue-Green | Blue | x initial | y initial | x aged | y aged |
|---|---|---|---|---|---|---|---|
| a-▲ | 65.0% | 5.0% | 30.0% | 0.260 | 0.291 | 0.360 | 0.359 |
| b-■ | 75.0% | 8.0% | 17.0% | 0.299 | 0.334 | 0.385 | 0.391 |
| c-◆ | 68.0% | 5.0% | 27.0% | 0.269 | 0.298 | 0.358 | 0.358 |
| d-□ | 65.0% | 15.0% | 20.0% | 0.264 | 0.331 | 0.338 | 0.381 |
| e-O | 67.0% | 5.5% | 27.5% | 0.277 | 0.319 | 0.369 | 0.374 |
| f-◇ | | | | 0.319 | 0.351 | 0.344 | 0.427 |
| g-☆ | | | | 0.305 | 0.355 | 0.365 | 0.414 |

For the luminance and chromaticity measurements, the phosphor blends of table 3 were incorporated into a screen printable resin/solvent system. EL test lamps were thick film devices and manufactured by screen printing using these pastes and completed with a dielectric, graphite and silver pastes. Such printable resin/solvent systems, dielectric, graphite and sliver pastes are known in the art; for the present test campaign, products by Electra Polymers Ltd (Tonbridge, Kent, UK) have been used. All EL test lamps were operated at 110 V_{RMS} and 400 Hz.

Fig.1 shows for each sample the initial and aged chromaticity coordinates. All chromaticity coordinates have been measure using a PR-650 spectrophotometer (by Photo Research, Inc., Chatsworth, Ca.).

Sample (f) corresponds to a commercial white phosphor blend GG73 by Osram Sylvania (Towanda, Pa.) used in phosphor ink by resin supplied by Electry Polymers. Sample (g) is a commercial white phosphor ink referenced "Luxprint® 8140 White" (by Dupont) tested in a lamp built entirely using Luxprint inks system for material consistency and compatibility.

As can be seen, the chromaticity of the five blends of the invention (a-e) remain close from the theoretical white over time, whereas the commercial white blends (f, g) have significantly derived more from the theoretical white (0.33; 0.33).

The dashed squares 10 and 12 in Fig.1 also indicate preferred expected ranges of initial and aged color coordinates for blends according to the invention. These preferred initial and aged ranges may be (0.280 ± 0.020, 0.310 ± 0.030) and (0.360 ± 0.030, 0.370 ± 0.030). In use, the blend color will evolve between the two areas, so that during a certain period the blend chromaticity will be very close to the theoretical white.

It will be understood that the present initial and aged values are given for exemplary purpose and are affected by measurement uncertainty.

### Example 2

Three different lots of fixed composition but varying luminance were prepared to illustrate the effect of relative luminance of each phosphor in the blend. The fixed blend proportions were: orange: 67.0 wt.%; blue-green: 5.5 wt.%; and blue: 27.5 wt.%.

**Table 4**

| | Orange | Blue-Green | Blue | x initial | y initial | x aged | y aged |
|---|---|---|---|---|---|---|---|
| ○ | 0.94 | 0.94 | 1.00 | 0.277 | 0.319 | 0.369 | 0.374 |
| ◆ | 0.85 | 0.90 | 1.00 | 0.270 | 0.300 | 0.358 | 0.358 |
| ■ | 0.81 | 0.84 | 1.00 | 0.260 | 0.293 | 0.357 | 0.359 |

## Claims

1. Phosphor blend comprising:
from 20 to 28 wt.% of a first electroluminescent phosphor having an x color coordinate from 0.144 to 0.174 and an y color coordinate from 0.165 to 0.225;
from 4 to 14 wt.% of a second electroluminescent phosphor having an x color coordinate from 0.155 to 0.185 and an y color coordinate from 0.380 to 0.420; and
from 65 to 75 wt.% of a third electroluminescent phosphor having an x color coordinate from 0.535 to 0.555 and an y color coordinate from 0.440 to 0.460.

2. Phosphor blend according to claim 1, comprising 26 to 28 wt.% of said first electroluminescent phosphor; 5 to 8 wt.% of said second electroluminescent phosphor; and 66 to 68 wt.% of said third electroluminescent phosphor.

3. Phosphor blend according to claim 1 or 2, wherein said first electroluminescent phosphor has a relative luminance of 1.00 and said second and third electroluminescent phosphors have a relative luminance of at least 0.80 with respect to that of said first electroluminescent phosphor.

4. Phosphor blend according to any one of the preceding claims, wherein
said first electroluminescent phosphor has an x color coordinate of about 0.159 and an y color coordinate of about 0.210, and is present in an amount of 27 wt.%;
said second electroluminescent phosphor has an x color coordinate of about 0.170 and an y color coordinate of about 0.400, and is present in an amount of 5 wt.%; and
said third electroluminescent phosphor has an x color coordinate of about 0.545 and an y color coordinate of about 0.450, and is present in an amount of 68 wt.%.

5. Phosphor blend according to claim 4, said first electroluminescent phosphor has a relative luminance of 1.00; said second electroluminescent phosphor has a relative luminance of 0.90; and said third electroluminescent phosphor has a relative luminance of 0.85.

6. Phosphor blend according to any one of the preceding claims, wherein said phosphor blend has an x color coordinate from 0.260 to 0.300 and an y color coordinate from 0.280 to 0.340.

7. Phosphor blend according to any one of the preceding claims, wherein said phosphor blend has an x color coordinate from 0.330 to 0.390 and an y color coordinate from 0.340 to 0.400at half-life.

8. Phosphor blend according to any one of the preceding claims, wherein said first electroluminescent phosphor comprises ZnS:Cu, Mn.

9. Phosphor blend according to any one of the preceding claims, wherein said second electroluminescent phosphor comprise ZnS:Cu.

10. Phosphor blend according to any one of the preceding claims, wherein said third electroluminescent phosphor comprises ZnS:Cu.

11. Phosphor blend according to any one of the preceding claims, wherein said blend has a half-life of ca. 2000 hours under normal working conditions.

12. Electroluminescent lamp comprising a phosphor blend according to any one of the preceding claims.

13. Use of the blend according to any one claims 1 to 11 in the manufacture of an electroluminescent lamp.
